# EUROPEAN PATENT APPLICATION

(11) **EP 2 677 486 A1**
(43) Date of publication of application: **25.12.2013**
(21) Application number: 13172925.3
(22) Date of filing: 19.06.2013
(51) Int. Cl.: G06Q 30/02, G06Q 30/06

(54) **Online shopping system and method**

(30) Priority: 19.06.2012 TW 101121971
(71) Applicant: M-Media Co., Ltd., Taipei City (TW)
(72) Inventor: Chen, Gi Gi, Taipei City (TW); Hsu, Shih Jieh, Taipei City (TW)
(74) Representative: Baldwin, Mark

(57) **Abstract**

An online shopping system and method in which an order unit selects from a shopping platform system the commodity to purchase and provides a receiver unit data, and then the shopping platform system uses the personal financial data of the order unit to apply to a payment unit for a billing-recognition payment data and finds out a membership corresponding code subject to the membership code of the membership card provided by the receiver unit so that a delivery unit can use a data reader to read the membership code and matching the membership code with the membership corresponding code and then handle the commodity to the receiver unit when matched, and at the same time, the deliver unit provides a confirmed signal to the shopping platform system to claim the payment unit to pay the money.

## Description

### FIELD OF THE INVENTION

The invention relates to online shopping technology, particularly to an online shopping system and method, which is simple and convenient to perform and can improve transaction security.

### BACKGROUND OF THE INVENTION

Due to the advantages of fastness, convenience, concealment and availability of diversified merchandise, the number of users of, and sales made using, online shopping systems has grown explosively in recent years, and the size of this market is expanding year by year.

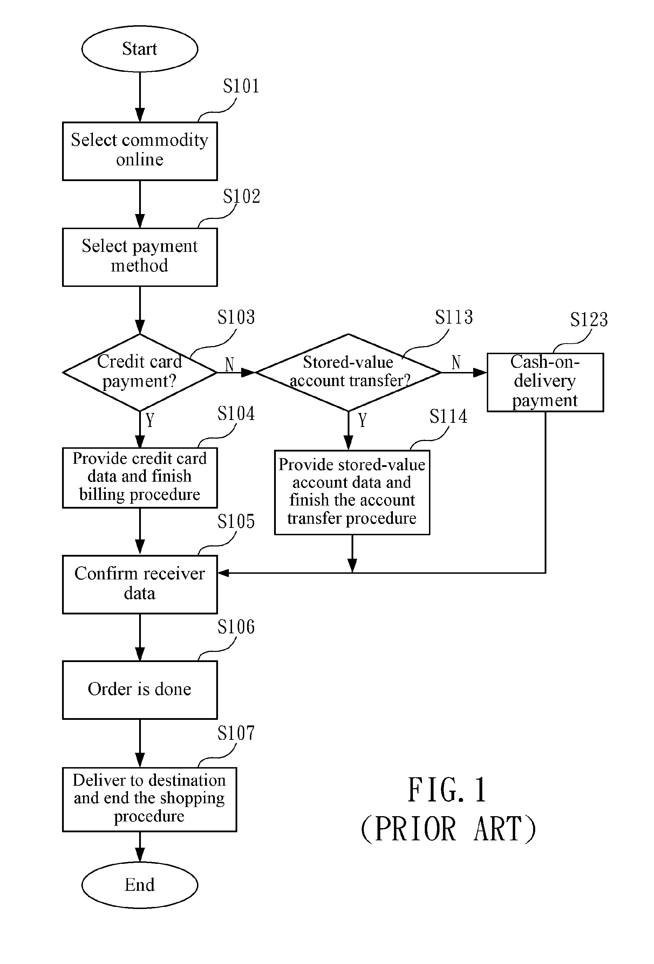

An online shopping system can be a network shopping system, TV shopping system, mobile electronic (cell phone) shopping system or planar shopping system (such as newspapers and magazines). The shopping flow of a regular online shopping system includes the following steps, as shown in Fig. 1.

Step S101: A consumer or subscriber uses the Internet, television or mobile phone to connect to a shopping platform to buy goods.

Step S102: After selection of the goods to buy, the subscriber checks out and selects the payment method, such as credit card payment, stored-value account transfer payment or cash-on-delivery payment.

Step S103: Confirm whether or not credit card payment is selected. If yes, then step S104, if not, proceed to step S113.

Step S104: The subscriber provides credit card data, such as credit card number, credit card expiry date and/or credit card verification code, and the shopping platform system provider, based on the credit card data, requests a payer, such as financial institution or credit card issuer, for payment directly.

Step S113 Confirm whether or not stored-value household payment, such as ATM (Automatic Teller Machine) transfer payment, credit card payment, prepaid card payment or stored-value card payment is selected? If yes, then step S114, if not, proceed to step S123.

Step S114: The subscriber transfers payment from the stored-value household account to the account assigned by the shopping platform in either online or offline.

Step S123: Selection of cash-on-delivery payment is confirmed.

Step S105: Confirm receiver data, such as receiver to be the subscriber, receiver name, receiver address, and/or receiving time.

Step S106: Has determined that the order is completed and instruction to deliver issues.

Step S107: Delivery personnel delivers the purchased goods to the specified receiver address, and hands the goods to the receiver or receiving agent after recognition of the identification of the receiver or receiving agent, thus completing the online shopping procedure. In the case of a cash-on-delivery payment, the delivery personnel still needs to collect the payment from the receiver or receiving agent.

Although the aforementioned online shopping process is simple and convenient, there are several shopping risks or disadvantages:
1. The subscriber's credit card account has been requested for payment in advance or the amount of the subscriber's stored-value account has been directly debited before the subscriber receives the purchased goods. If the subscriber is going to unsubscribe or to return the merchandise, the subscriber must go through a refund process. This is not only inconvenient, but will result in a loss of bank account interest.
2. Because it is difficult to request the receiver or receiving agent for identification recognition, goods sent to the delivery address may be falsely claimed, causing shopping disputes.
3. When an online purchase order is completed, the online shopping system may send a message or merchandise voucher to the subscriber or receiver, such as concert ticket. When the message of merchandise voucher is missing or illegally replicated, the commodity content could be unveiled, and the purchased goods may be stolen.

### SUMMARY OF THE INVENTION

It is an object of the invention to provide embodiments of an online shopping system and method that facilitate shopping convenience, enhance shopping safety level, and at least partially overcomes the drawbacks of conventional online shopping systems, or to provide an alternative to existing online shopping systems.

It is another object of the invention to provide embodiments of an online shopping system and method that enable the delivery personnel to read the membership code of the membership card provided by the receiver by means of a data reader, facilitating quick recognition of the identification of the receiver, avoiding commodity pickup impersonally and enhancing online shopping safety level.

It is still another object of the invention to provide embodiments of an online shopping system and method, which does not claim the financial organization, card issuer or stored-value account to pay the money before handing over the purchased commodity to the receiver, avoiding the troubles due to unsubscription or return of commodities, and protecting the subscriber against any bank interest loss.

The invention includes embodiments of an online shopping system, comprising: at least one order unit, each said order unit comprising an order device connectable to a network; at least one pickup unit, each said pickup unit comprising a membership card having set therein a membership code; a shopping platform system connected to said network, said shopping platform system comprising a merchandise display device, a member data processing device electrically connected to said merchandise display device and having stored therein a membership corresponding code corresponding to said membership code, and a fund processing device electrically connected to said merchandise display device, said merchandise display device being adapted to display a commodity selected through said order unit; a payment unit connected to said network, said payment unit comprising a financial data storage device and a payment processing device, said financial data storage device having stored therein a personal financial data of each person using said order unit; a delivery unit adapted to delivery each commodity selected through said order unit, said delivery unit comprising a data reader, said data reader comprising a display a reading device, a signal transmitter and a display device, said reading device being adapted for reading the membership code of said membership card, said signal transmitter being adapted for transmitting an object confirmed signal to said shopping platform system; and a data comparator installed in one of said data reader and said shopping platform system and adapted for matching the membership code fetched by said reading device with the membership corresponding code corresponding to the selected commodity.

The invention also includes embodiments of an online shopping method, comprising the steps of: connecting an order unit to a shopping platform system to select a commodity to be purchased and to provide a pickup unit, said shopping platform system having stored therein a membership corresponding code for identifying said receiver unit; selecting a payment method through said order unit to provide a personal financial data to said shopping platform system; connecting said shopping platform system to a payment unit to obtain a pay code subject to said personal financial data and then to generate a billing-recognition payment data subject to the obtained pay code; said delivery unit carrying the selected commodity and a data reader to said pickup unit, and said pickup unit carrying a membership card having stored therein a membership code corresponding to said membership corresponding code; said data reader reading said membership code of said membership card of said pickup unit, and then said data reader or said shopping platform system matching said membership code with said membership corresponding code and then handing over the commodity to said pickup unit when the matching result matched; and said delivery unit transmitting an object confirmed signal to said shopping platform system, and then said shopping platform system transmitting said object confirmed signal to said payment unit to request for money payment for the delivered commodity.

In one embodiment said order unit and said pickup unit are combined into an order and pickup unit.

In one embodiment said data reader further comprises a data storage device adapted for storing the membership corresponding code corresponding to the selected commodity; said data comparator is built in said data reader for directly matching the membership code fetched by said data reader with the membership corresponding code corresponding to the selected commodity.

In one embodiment said reading device of said data reader is selected from at least one of the group of wireless signal reader, optical signal reader, barcode scanner, infrared signal reader, contact type card reader, magnetic stripe reader, text symbol input reader and digital input reader.

In one embodiment said membership card is provided by one of said receiver unit and said shopping platform system.

In one embodiment said membership card is selected from the group of RFID (Radio-frequency identification) card, NFC (Near Field Communication) card, chip card, floppy disk card, digital card, symbol card or barcode label.

In one embodiment said display device of said data reader is selected from the group of video display, audio player and optical indicator.

In one embodiment said shopping platform system is selected from the group of network shopping system, TV shopping system, mobile electronic shopping system and planar shopping system; said network is selected from the group of Internet, LAN (local area network), telecommunication line, cable TV line, wireless communication line and planar network.

In one embodiment said payment unit is one of the group of financial organizations, card issuers, joint credit information centres and stored-value card issuers.

In one embodiment said fund processing unit of said shopping platform system has stored therein a billing-recognition payment data, said billing-recognition payment data comprising a pay code.

In one embodiment said pay code is an authentication code or block data.

In one embodiment the commodity selected through said order unit is a ticket; said data reader is a ticket machine.

In one embodiment said pickup unit comprises an order code recognizable by said data comparator.

One embodiment further comprises checking whether or not said receiver unit having said membership card, and then requesting said order unit to provide a new pickup unit if negative.

In one embodiment said payment method is a credit card payment or stored-value account transfer payment; said pay code is an authentication code or block data.

One embodiment further comprises enabling said shopping platform system to generate an order code after generation of said billing-recognition payment data and to transmit said order code to said receiver unit; and enabling said data reader to read said order code from said receiver unit and enabling one of said data reader and said shopping platform system to match the correctness of said order code.

### BRIEF DESCRIPTION OF THE DRAWINGS

Fig. 1 is a flow chart of an online shopping system according to the prior art.
Fig. 2 is a block diagram of an online shopping system in accordance with a first embodiment of the invention.
Fig. 3 is a flow chart of an online shopping method used in the online shopping system in accordance with the first embodiment of the invention (I).
Fig. 3A is a flow chart of an online shopping method used in the online shopping system in accordance with the first embodiment of the invention (II).
Fig. 4 is a block diagram of an online shopping system in accordance with a second embodiment of the invention.
Fig. 5 is a flow chart of an online shopping method used in the online shopping system in accordance with the second embodiment of the invention.

### DETAILED DESCRIPTION

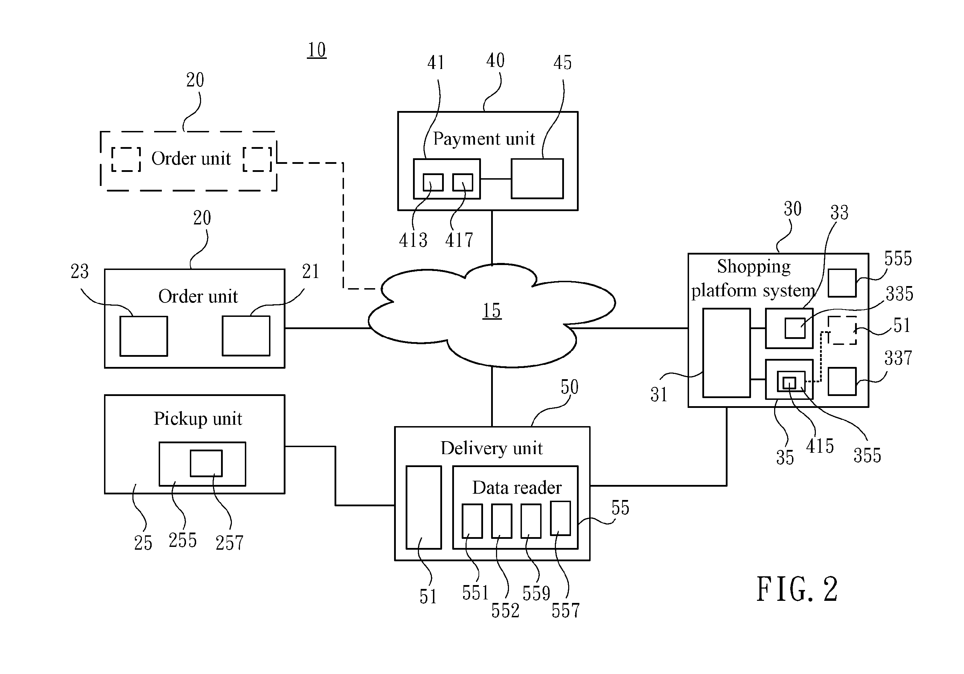

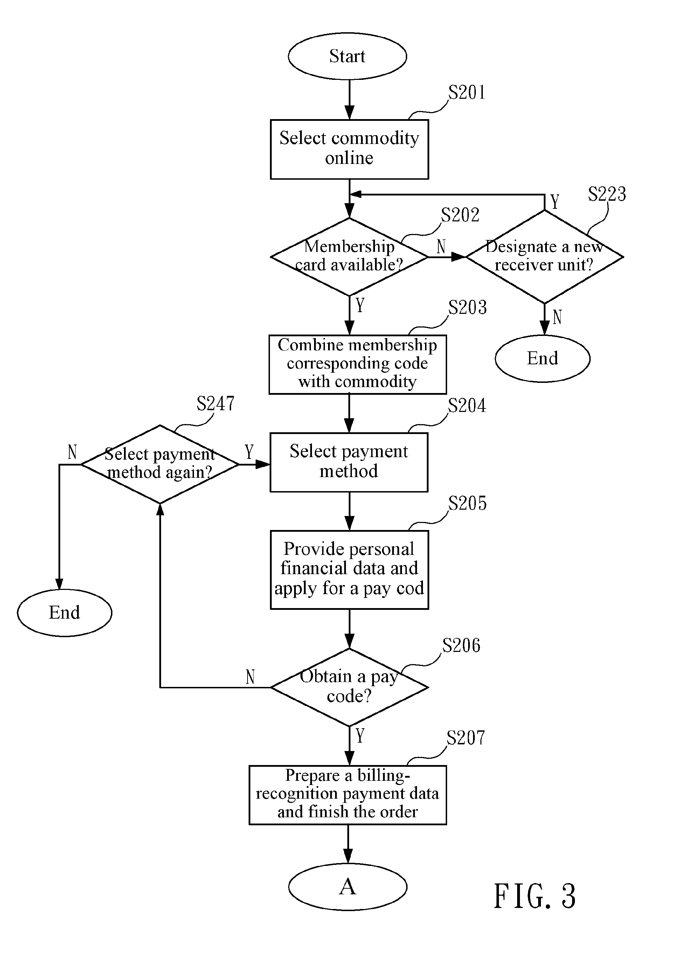

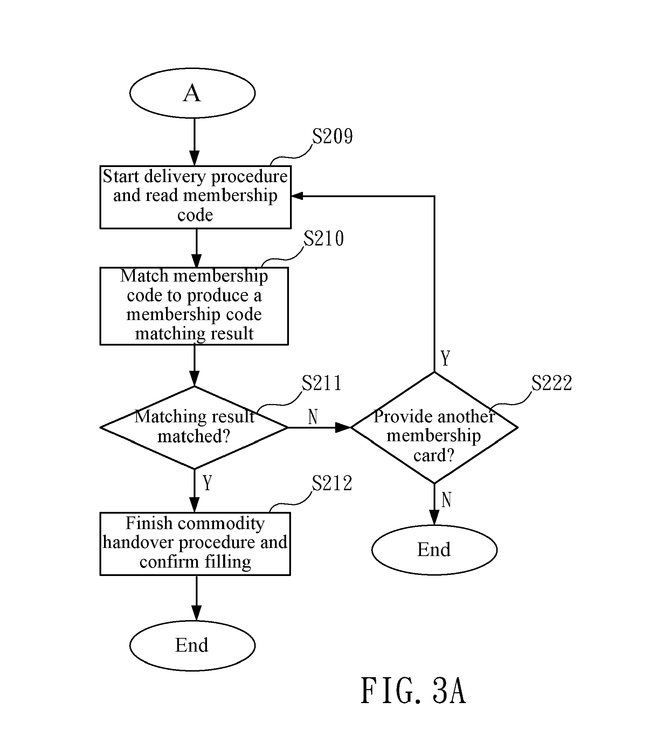

Referring to Figs. 2, 3 and 3A, an online shopping system **10** comprises at least one order unit **20,** at least one pickup unit **25,** a shopping platform system **30,** a payment unit **40,** and a delivery unit **50.**

The order unit **20,** the shopping platform system **30** and the payment unit **40** are respectively connected to a network **15,** which can be the Internet, a LAN (local area network), a telecommunication line, a cable TV line, a wireless communication line, or a planar network (newspaper, magazine).

Referring to Fig. 3, in Step S201 when a consumer or the order unit **20** is going to purchase goods or services online, an order device **21** of the order unit **20** is linked to the network **15** to connect to the shopping platform system **30.** The shopping platform system **30** can be a network shopping system, TV shopping system, mobile electronic shopping system or planar shopping system (such as newspaper or magazine shopping system).

The shopping platform system **30** comprises a merchandise display device **31** having electrically connected thereto a member data processing device **33** and a fund processing device **35.** The merchandise display device **31** can display various selling goods or service items. The order unit **20** can select from the merchandise display device **31** the desired service commodities **51,** such as physical commodities, securities or services.

In Step S202, when going to check out after selection of the desired commodities **51** through the order unit **20,** the shopping platform system **30** will request the order unit **20** to provide a pickup unit **25** and the related data, such as receiver name, receiver address, and/or receiving time, and inquire and confirm whether or not the pickup unit **25** has obtained a membership card **255** that has been registered in the shopping platform system **30.** If the pickup unit **25** has obtained a membership card **255,** proceed to step S203, if not, proceed to step S223.

The membership card **255** must be a physical card or entity tag that carries a membership code **257,** such as RFID (Radio-frequency identification) card, NFC (Near Field Communication) card, chip card, floppy disk card, digital card, symbol card or barcode label. Further, the membership card **255** can be a card issued by the shopping platform system provider or assigned related party, or a physical card of the pickup unit **25** itself, such as an insurance card, credit card, debit card, EasyCard, iCash card, TaiwanMoney card, pay card, cash card, transportation card, Octopus card or stored-value card.

The shopping platform system **30** generates a membership corresponding code **335** subject to the membership code **257** during registration, and stores the membership corresponding code **335** in the membership data processing unit **33.** The membership corresponding code **335** can be the same as (consistent with) the membership code **257.** Alternatively, the membership corresponding code **335** can be obtained through a calculation using the membership code **257.** Thus, the membership corresponding code **335** can be regarded as a verification code of the membership code **257** for verifying the identity of the pickup unit **25.**

In one embodiment, the membership code **257** can be a serial data or other readable identification data stored in a RFID card, NFC card, chip card, floppy disk card, digital card, symbol card or barcode label. In another embodiment, the symbol card or barcode label can be presented in the form of, for example, a one-dimensional bar code, 2-dimensional bar code or QR (quick response) code, or a label form that can be used as the membership code **257.**

In Step S223, the designated pickup unit **25** does not have a membership card **255.** Therefore, it must request the order unit **20** whether or not to re-assign a new pickup unit **25.** If yes, select a new pickup unit **25,** and then proceed to step S202. If the order unit **20** cannot assign a new pickup unit **25** or the number of times in changing a new pickup unit **25** has reached a set number of times (N times), it must end the online shopping procedure regretfully.

In Step S203, the shopping platform system **30** fetches the membership corresponding code **335** subject to the pickup unit **25,** and combines or records the selected commodity **51** with the fetched membership corresponding code **335.** In other words, the membership corresponding code **335** is like a merchandise voucher of the pickup unit **25** for exchanging the purchased commodity **51.**

In Step S204, the order unit **20** is requested to select the payment method to be credit card payment or stored-value account transfer payment.

In one embodiment, the stored-value householder can be an ATM (automatic teller machine), or a valuable card, such as credit card, debit card, EasyCard, iCash card, transportation card, Octopus card, prepaid card or stored-value card that has stored therein cash equivalent values.

In Step S205, the order unit **20** provides a personal financial data **23,** such as credit card data or stored-value account transfer data, to the shopping platform system **30.** The shopping platform system **30** uses the received personal financial data **23** to apply to the payment unit **40** for a pay code **415** that can be an authentication code or a block data equivalent to the value of the purchased commodity.

The aforementioned personal financial data **23** refers to the provision of the card number, validity date and/or back digital code of a credit card or stored-value card, or a scheduled transfer procedure made by the order unit **20** directly online or offline.

The payment unit **40** can be a financial organization (bank), card issuer (for example, credit card issuer), joint credit information centre (such as credit card centre) or stored-value card issuer, comprising a financial data storage device **41** and a payment processing device **45.** The financial data storage device **41** has stored therein the personal financial data **413** of the user or subscriber **20,** such as financial amount of deposit, credit limit, available credit limit, and/or name.

In Step S206, the shopping platform system **30** confirms receipt of the pay code **415** of authentication code or block data. If yes, proceed to step S207, or if not, proceed to step S247.

In Step S207, the order unit **20** has a stored value or available credit limit sufficient to pay for the purchased commodity **51** and other related costs., Thus, the shopping platform system **30** will, based on the received personal financial data **23** and pay code **415,** produce a billing-recognition payment data **355** and store the data in the fund processing device **35** to complete the order procedure

The billing-recognition payment data **355** enables the shopping platform system **30** to request the payment unit **40** to pay or transfer the money immediately after the purchased commodity **51** has been safely handed over to the pickup unit **25** but not before delivery of the purchased commodity **51** to the pickup unit **25,** protecting the order unit **20** against any bank interest loss and avoiding troubles due to unsubscription or return of commodities.

In Step S247, the personal financial data +**23** provided by the order unit **20** is insufficient to pay for the purchased commodity **51** and other related costs. Thus, the order unit **20** is asked whether or not to select another payment method. If yes, return to step S204 and if not, or the number of times in changing payment method has reached the set number of times (N times), end this online shopping procedure regretfully.

In Step S209, the shopping platform system **30** instructs or entrusts a delivery unit **50** to start a delivery procedure. The delivery unit **50** will carry a data reading device **55** with the purchased commodity **51.** The delivery unit **50** or the shopping platform system **30** will obtain in advance the delivery time and destination of the purchased commodity **51** from the pickup unit **25** or the order unit **20,** and the pickup unit **25** (either the subscriber, appointed receiver or other agent) will carry the membership card **255** to pick up the purchased commodity **51.**

The data reader **55** comprises at least one reading device **551,** a signal transmitter **557,** and a display device **559.** The reading device **551** can be a wireless signal reader, optical signal reader, barcode scanner, infrared signal reader, contact type card reader, magnetic stripe reader, text symbol input reader and/or digital input reader for reading the membership code **257** in the membership card **255.** The display device **559** can be a video display, audio player and/or optical indicator.

After the membership code **257** is obtained from the membership card **255,** the signal transmitter **557** of the data reader **55** sends the membership code **257** to the shopping platform system **30** through the network **15.**

In Step S210, a built-in data comparator **555** of the shopping platform system **30** matches the obtained membership code **257** to be in line with (or same as) the fetched membership corresponding code **335** or not, and then provides a membership code matching result **337** to the delivery unit **50.**

In Step S211, the delivery unit **50** obtains the membership code matching result **337** from the display device **559** and then proceeds to step S212 if the matching result is in line with each other, or step S222, if not.

In Step S222, the membership card **255** provided by the pickup unit **25** is not the originally authorized membership card, and thus, the pickup unit **25** is requested to provide a membership card **255** again. If the pickup unit **25** can provide a membership card **255** again, return to step S209, enabling the data reader **55** to read the newly provided membership card **255.** If the pickup unit **25** cannot provide a membership card **255** again, or the membership card reading times is over a set number of times (N times), end the handover procedure and this online shopping procedure.

In Step S212, the membership card **255** provided by the pickup unit **25** is the originally authorized membership card, and thus, the delivery procedure can be done. When handing over the purchased commodity **51** to the pickup unit **25,** the delivery unit **50** will also transfer an object confirmed signal **552** to the shopping platform system **30.** After obtaining the object confirmed signal **552,** the shopping platform system **30** immediately drives the fund processing device **35** to transfer the prepared billing-recognition payment data **355** to the payment unit **40,** requesting the payment processing device **45** of the payment unit **40** to pay money for the purchased commodity **51** subject to the pay code **415.** At this time, the whole online shopping procedure is done.

Because the membership corresponding code **335** is equivalent to a merchandise voucher of the purchased commodity **51** and stored in the shopping platform system **30,** the troubles due to missing or illegal replication of the merchandise voucher are effectively reduced.

Further, the membership card **255** and the membership code **257** can be rapidly read and checked by the data reader **55,** and therefore, the identity of the pickup unit **25** can be rapidly examined, enhancing commodity delivery safety.

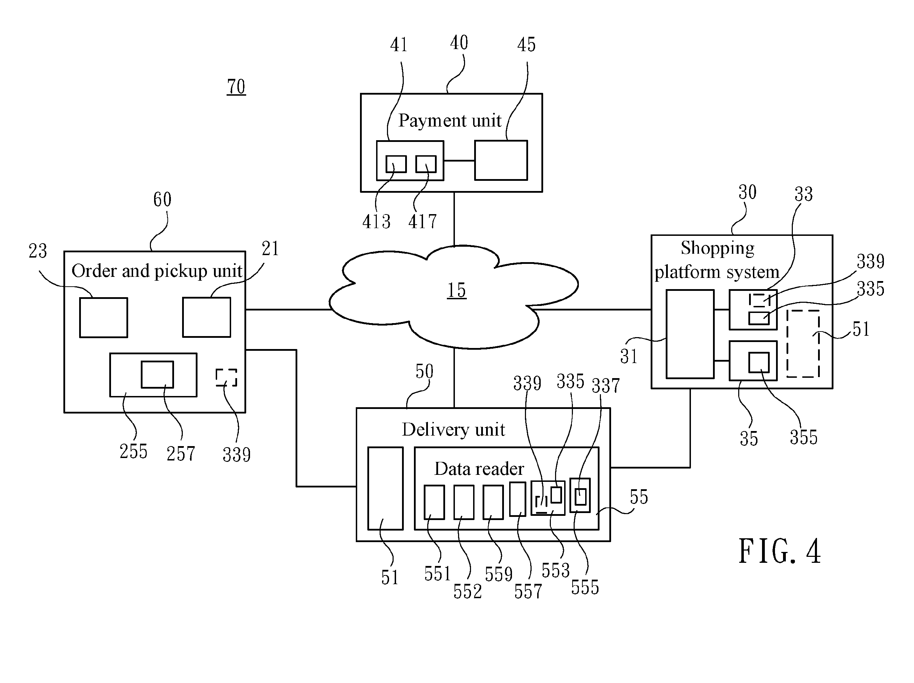

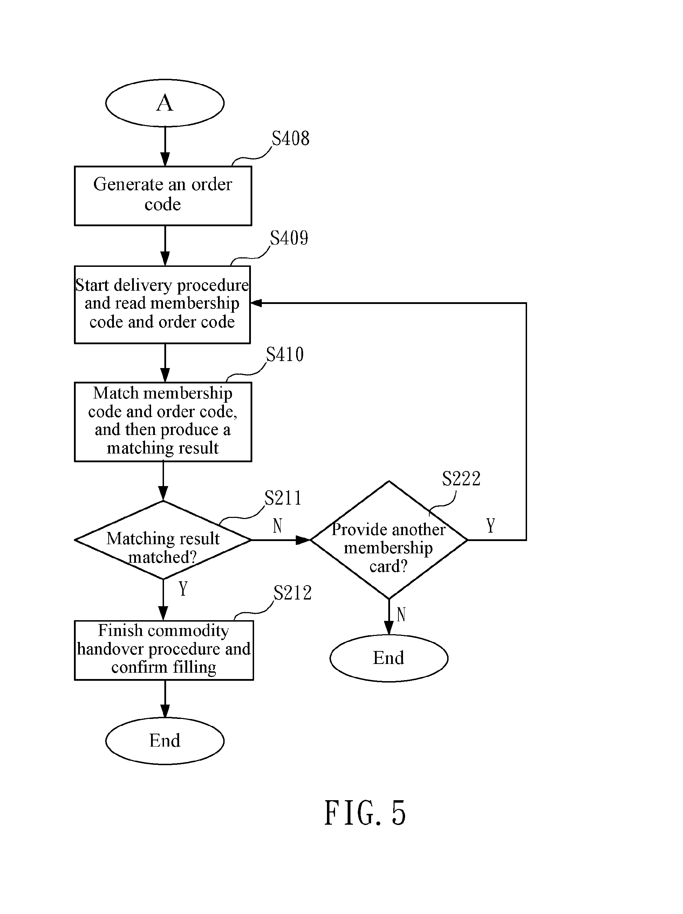

Figs. 4 and 5 illustrate a second embodiment of the invention. According to this second embodiment, the online shopping system **70** comprises an order and pickup unit **60,** which is a combination of the order unit **20** and pickup unit **25** of the first embodiment.

Further, the data reader **55** of the delivery unit **50** in this second embodiment further comprises a data storage device **553** and a data comparator **555.** The data storage device **553** is adapted for storing each membership corresponding code **335** corresponding to each respective purchased commodity **51,** membership card **255,** and membership code **257.**

When reading the membership code **257,** the data reader **55** needs not to transfer the fetched membership code **257** to the shopping platform system **30** and can match the fetched membership code **257** with the respective membership code **335** by its built-in data comparator **55** to produce a membership code matching result **337.**

According to this second embodiment, the online shopping method, after the step S207 shown in Fig. 3, further comprises Step S408 in between step S207 and step S209. The shopping platform system **30** generates an order code **339** after order procedure. This order code **339** can be an ID code of the order and pickup unit **60,** cell phone number or any personal identification number, or a random number generated by the shopping platform system **30.**

The order code **339** will be stored in the membership data processing device **33** of the online shopping platform system **30** and/or the data storage device **553** of the delivery unit **50,** and transferred to the order and pickup unit **60** by means of a SMS (short message service) or through the network **15.**

Step S409 to substitute for Step S209 shown in Fig. 3A. The shopping platform system **30** instructs or entrusts a delivery unit **50** to start a delivery procedure, and the delivery unit **50** will carry a data reading device **55** with the purchased commodity **51.** The order and pickup unit **60** will carry the membership card **255** to pick up the purchased commodity **51.**

Step S410 to substitute for Step S210 shown in Fig. 3A. The data reader **55** reads the membership code **257** of the pickup unit **25** and requests the order and pickup unit **60** to provide the order code **339** or to key in the order code **339** through the data reader **55.** The order code **339** will be sent to the shopping platform system **30,** or matched by the data comparator **555** of the data reader **55** directly.

In this second embodiment, the online shopping system **70,** in addition to the aforesaid membership code **257** and membership corresponding code **335** matching procedure, will also perform an extra order code **339** matching procedure, enhancing the ID recognition of the order and pickup unit **60** and online shopping safety level.

When the shopping platform system **30** sells a precious high price commodity and obtains an order, the delivery unit **50** will carry multiple purchased commodities **51,** for example, three ruby jewellery pieces for selection by the order and pickup unit **60,** enabling the consumer to enjoy an over-the-counter purchase. At this time, the matching of the membership code **257** with the membership corresponding code **335** and the order code **339** matching procedure disclosed highlight their importance. Through the double identity recognition and matching procedure, the shopping safety of this online shopping method is enhanced.

Further, the purchased commodity **51** can be a ticket, for example, admission ticket, entrance ticket, transportation ticket, etc. In this case, the delivery unit **50** is a check-up unit at the entrance, and the data reader **255** is a ticket machine.

This disclosure is intended to explain how to fashion and use various embodiments in accordance with the invention rather than to limit the true, intended, and fair scope and spirit thereof. The foregoing description is not intended to be exhaustive or to limit the invention to the precise form disclosed. Modifications or variations are possible in light of the above teachings. The embodiment(s) was chosen and described to provide the best illustration of the principles of the invention and its practical application, and to enable one of ordinary skill in the art to utilize the invention in various embodiments and with various modifications as are suited to the particular use contemplated. All such modifications and variations are within the scope of the invention as determined by the appended claims, as may be amended during the pendency of this application for patent, and all equivalents thereof, when interpreted in accordance with the breadth to which they are fairly, legally, and equitably entitled. Although this invention has been disclosed and illustrated with reference to particular embodiments, the principles involved are susceptible for use in numerous other embodiments that will be apparent to persons skilled in the art. This invention is, therefore, to be limited only as indicated by the scope of the appended claims.

## Claims

1. An online shopping system, comprising:
--at least one order unit, each said order unit comprising an order device connectable to a network;
--at least one pickup unit, each said pickup unit comprising a membership card having set therein a membership code;
--a shopping platform system connected to said network, said shopping platform system comprising a merchandise display device, a member data processing device electrically connected to said merchandise display device and having stored therein a membership corresponding code corresponding to said membership code, and a fund processing device electrically connected to said merchandise display device, said merchandise display device being adapted to display a commodity selected through said order unit;
--a payment unit connected to said network, said payment unit comprising a financial data storage device and a payment processing device, said financial data storage device configured to have stored therein personal financial data of each person using said order unit;
--a delivery unit adapted to deliver each commodity selected through said order unit, said delivery unit comprising a data reader, said data reader comprising a reading device, a signal transmitter and a display device, said reading device being adapted for reading the membership code of said membership card, said signal transmitter being adapted for transmitting an object confirmed signal to said shopping platform system; and
--a data comparator installed in one of said data reader and said shopping platform system and adapted for matching the membership code fetched by said reading device with the membership corresponding code corresponding to the selected commodity.

2. The online shopping system as claimed in claim 1, wherein said order unit and said pickup unit are combined into an order and pickup unit.

3. The online shopping system as claimed in claim 1 or 2, wherein said data reader further comprises a data storage device adapted for storing the membership corresponding code corresponding to the selected commodity; and said data comparator is built in said data reader for directly matching the membership code fetched by said data reader with the membership corresponding code corresponding to the selected commodity.

4. The online shopping system as claimed in claim 1, 2 or 3, wherein said reading device of said data reader is selected from at least one of the group of a wireless signal reader, optical signal reader, barcode scanner, infrared signal reader, contact type card reader, magnetic stripe reader, text symbol input reader and digital input reader.

5. The online shopping system as claimed in any one of the preceding claims, wherein said membership card is provided by one of said receiver unit and said shopping platform system, and said membership card is selected from the group of RFID (Radio-frequency identification) card, NFC (Near Field Communication) card, chip card, floppy disk card, digital card, symbol card or barcode label.

6. The online shopping system as claimed in any one of the preceding claims, wherein said display device of said data reader is selected from the group of a video display, audio player and optical indicator.

7. The online shopping system as claimed in any one of the preceding claims, wherein said shopping platform system is selected from the group comprising a network shopping system, TV shopping system, mobile electronic shopping system and planar shopping system; said network is selected from the group comprising the Internet, a LAN (local area network), telecommunication line, cable TV line, wireless communication line and planar network; and said payment unit is one of the group of financial organizations, card issuers, joint credit information centres and stored-value card issuers.

8. The online shopping system as claimed in any one of the preceding claims, wherein said fund processing unit of said shopping platform system has stored therein a billing-recognition payment data, said billing-recognition payment data comprising a pay code.

9. The online shopping system as claimed in claim 8, wherein said pay code is an authentication code or block data.

10. The online shopping system as claimed in any one of the preceding claims, wherein the commodity selected through said order unit is a ticket and said data reader is a ticket machine.

11. The online shopping system as claimed in any one of the preceding claims, wherein said pickup unit comprises an order code recognizable by said data comparator.

12. An online shopping method, comprising the steps of:
--connecting an order unit to a shopping platform system to select a commodity to be purchased and to provide a pickup unit, said shopping platform system having stored therein a membership corresponding code for identifying said receiver unit; and
--selecting a payment method through said order unit to provide a personal financial data to said shopping platform system;
--connecting said shopping platform system to a payment unit to obtain a pay code subject to said personal financial data and then to generate a billing-recognition payment data subject to the obtained pay code;
--said delivery unit carrying the selected commodity and a data reader to said pickup unit, and said pickup unit carrying a membership card having stored therein a membership code corresponding to said membership corresponding code;
--said data reader reading said membership code of said membership card of said pickup unit, and then said data reader or said shopping platform system matching said membership code with said membership corresponding code and then handing over the commodity to said pickup unit when the matching result matched; and
--said delivery unit transmitting an object confirmed signal to said shopping platform system, and then said shopping platform system transmitting said object confirmed signal to said payment unit to request for money payment for the delivered commodity.

13. The online shopping method as claimed in claim 12, further comprising checking whether or not said receiver unit has said membership card, and then requesting said order unit to provide a new pickup unit if negative.

14. The online shopping method as claimed in claim 12 or 13, wherein said payment method is a credit card payment or stored-value account transfer payment and said pay code is an authentication code or block data.

15. The online shopping system as claimed in claim 12, 13 or 14, further comprising:
--enabling said shopping platform system to generate an order code after generation of said billing-recognition payment data and to transmit said order code to said receiver unit; and
--enabling said data reader to read said order code from said receiver unit and enabling one of said data reader and said shopping platform system to match the correctness of said order code.
